# EUROPEAN PATENT APPLICATION

(11) **EP 2 341 554 A2**
(43) Date of publication of application: **06.07.2011**
(21) Application number: 10165129.7
(22) Date of filing: 07.06.2010
(51) Int. Cl.: H01L 31/048

(54) **Solar panel tile structure and combination thereof**

(30) Priority: 30.12.2009 TW 098145975
(71) Applicant: Axuntek Solar Energy, Pingtung County 900 (TW)
(72) Inventor: Lee, Shih-Wei, 843, Kaohsiung County (TW); Liang, Tien-Hsing, 111, Taipei City (TW); Hou, Chi-Hung, 100, Taipei City (TW); Chiu, Chen-Hai, 308, Hsinchu County (TW); Tseng, Chiu-An, 826, Kaohsiung County (TW)
(74) Representative: Becker Kurig Straus

(57) **Abstract**

A solar panel tile structure (10) capable of draining water includes a solar panel (12) and a supporting plate (14) for supporting the solar panel (12). At least one draining slot (16) is formed on the supporting plate (12) and disposed around the solar panel (12) for draining the water surrounding the solar panel (12).

## Description

The present invention relates to a solar panel tile structure and a combination thereof with water-draining function according to the pre-characterizing clauses of claims 1 and 7.

Generally, a conventional solar panel can be disposed on an outside surface of a building. For example, the conventional solar panel can be installed on a housetop or an external wall so as to transform solar energy into electrical energy effectively. The conventional solar panel disposed on the housetop of the building can transform the solar energy into the electrical energy in a sunny day and can protect the building in a rainy day. However, the conventional solar panel tile can not drain water away from the solar panel effectively in the rainy day, so that electronic elements inside the solar panels of the conventional solar panel tile are damaged by the water easily. Thus, design of a solar panel tile structure capable of draining the water around the solar panel effectively is an important issue in the solar panel industry.

This in mind, the present invention aims at providing a solar panel tile structure and a combination thereof that are capable of draining the water around a solar panel effectively.

This is achieved by providing a solar panel tile structure and a solar panel tile structure combination according to claims 1 and 7. The dependent claims pertain to corresponding further developments and improvements.

As will be seen more clearly from the detailed description following below, the claimed solar panel tile structure includes a solar panel and a supporting plate for supporting the solar panel. At least one draining slot is formed on the supporting plate and disposed around the solar panel for draining water surrounding the solar panel.

In the following, the invention is further illustrated by way of example, taking reference to the accompanying drawings. Thereof
FIG.1 is a diagram of a first solar panel tile structure according to a preferred embodiment of the present invention, and
FIG.2 is a diagram of a solar panel tile structure combination according to the preferred embodiment of the present invention.

To provide a better understanding of the presented invention, a preferred embodiment will be explained in details. The preferred embodiment of the present invention is illustrated in the accompanying drawings with numbered elements, but application of the present invention is not limited to the preferred embodiment.

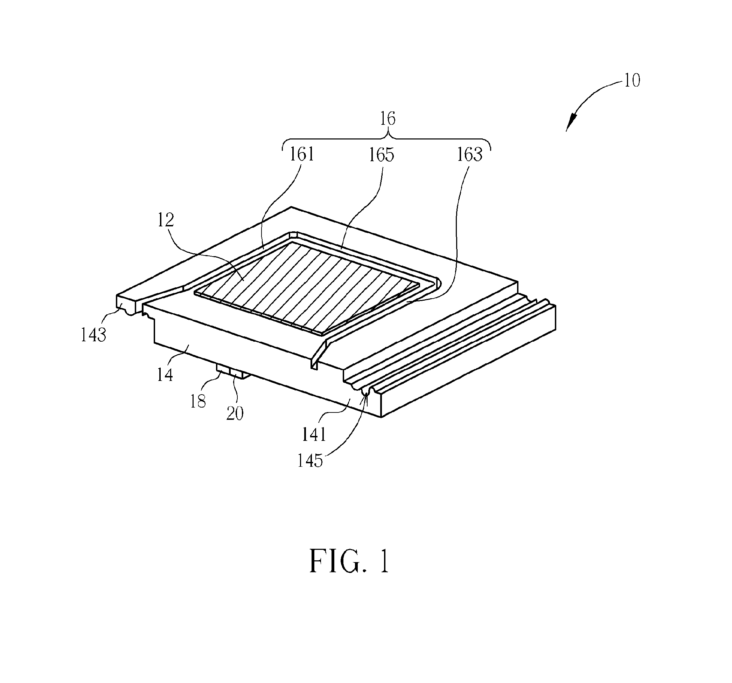

Please refer to FIG.1 . FIG.1 is a diagram of a first solar panel tile structure 10 according to a preferred embodiment of the present invention. The first solar panel tile structure 10 includes a first solar panel 12 and a first supporting plate 14. The first solar panel tile structure 12 is disposed on the first supporting plate 14 by locking, gluing, or wedging. A first draining slot 16 is formed on the first supporting plate 14 and disposed around the first solar panel 12 for draining water surrounding the first solar panel 12. A first wedging portion 141 and a second wedging portion 143 are respectively formed on two lateral sides of the first supporting plate 14. A draining channel 145 is formed on the first wedging portion 141 . The first wedging portion 141 and the second wedging portion 143 are structural portions capable of wedging with each other tightly. The first draining slot 16 includes a first ditch 161 disposed on a left side of the first supporting plate 14, a second ditch 163 disposed on a right side of the first supporting plate 14, and a third ditch 165 disposed on an upper side of the first supporting plate 14 and connected to the first ditch 161 and the second ditch 1 63. As shown in FiG.1, the first ditch 1 61 , the second ditch 163, and the third ditch 165 are connected and disposed around the first solar panel 12. In this embodiment, the first ditch 161 can be parallel to the second ditch 163 substantially, and the third ditch 165 can be perpendicular to the first ditch 1 61 and the second ditch 163 substantially. Because a height of the first solar panel 12 can substantially be higher than a height of the first supporting plate 14, the water on the first solar panel 12 can flow into the first draining slot 16 spontaneously, so as to drain the water out of the first solar panel tile structure 10 effectively.

For preventing the water from overflowing the first draining slot 1 6 onto the first solar panel 1 2 when the water flows from the third ditch 165 into the first ditch 161 and the second ditch 163, ends of the first ditch 161 and the second ditch 163 far from the third ditch 165 can bend outward the first supporting plate 14, so that the water flowing from the third ditch 165 into the first ditch 161 and the second ditch 163 can be guided toward two sides of the first solar panel tile structure 10 outwardly. The shape of the first draining slot 16 is not limited to the above-mentioned embodiment and depends on design demand. Besides, the first solar panel tile structure 10 can further include a transmission cable (not shown in figures) and a junction box 18 disposed on a side of the first supporting plate 14. Two ends of the transmission cable can be electrically connected to the first solar panel 12 and the junction box 18 respectively, for transmitting electricity transformed by the first solar panel 12 to the junction box 18. The first solar panel tile structure 10 can further include a battery module 20 electrically connected to the junction box 18 for storing the electricity received by the junction box 18.

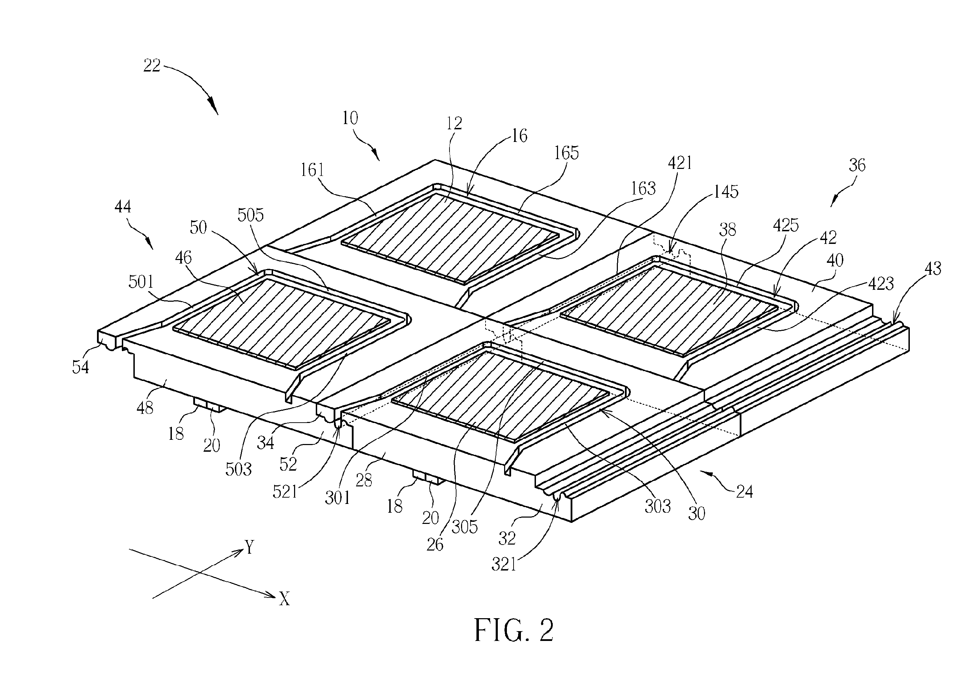

Please refer to FIG.2. FIG.2 is a diagram of a solar panel tile structure combination 22 according to the preferred embodiment of the present invention. A plurality of solar panel tile structures having the same structural design can be combined for forming the solar panel tile structure combination 22 as an array. For example, the solar panel tile structure combination 22 includes the first solar panel tile structure 10 and a second solar panel tile structure 24. The second solar panel tile structure 24 includes a second panel 26 and a second supporting plate 28 for supporting the second solar panel 26. At least one second draining slot 30 is formed on the second supporting plate 28 and disposed around the second solar panel 26 for draining water surrounding the second solar panel 26. A first wedging portion 32 and a second wedging portion 34 are formed on two lateral sides of the second supporting plate 28. A draining channel 321 is formed on the first wedging portion 32. The first wedging portion and the second wedging portion 34 are structural portions capable of wedging with each other tightly. Besides, the second draining slot 30 includes a fourth ditch 301 disposed on a left side of the second supporting plate 28, a fifth ditch 303 disposed on a right side of the second supporting plate 28, and a sixth ditch 305 disposed on an upper side of the second supporting plate 28 and connected to the fourth ditch 301 and the fifth ditch 303. The fourth ditch 301 can be parallel to the fifth ditch 303 substantially, and the sixth ditch 305 can be perpendicular to the fourth ditch 301 and the fifth ditch 303 substantially. Ends of the fourth ditch 301 and the fifth ditch 303 far from the sixth ditch 305 can bend outward the second supporting plate 28, so that the water flowing from the sixth ditch 305 into the fourth ditch 301 and the fifth ditch 303 can be guided toward two sides of the second solar panel tile structure 24 outwardly, so as to prevent the water from overflowing the second draining slot 30 onto the second solar panel 26.

The solar panel tile structure combination 22 can further include a third solar panel tile structure 36. As shown in FIG.2, the third solar panel tile structure 38 includes a third panel 38 and a third supporting plate 40 for supporting the third solar panel 38. At least one third draining slot 42 is formed on the third supporting plate 40 and disposed around the third solar panel 38 for draining water surrounding the third solar panel 38. The third draining slot 42 includes a seventh ditch 421 disposed on a left side of the third supporting plate 40, an eighth ditch 423 disposed on a right side of the third supporting plate 40, and a ninth ditch 425 disposed on an upper side of the third supporting plate 40 and connected to the seventh ditch 421 and the eighth ditch 423. Ends of the seventh ditch 421 and the eighth ditch 423 far from the ninth ditch 425 can bend outward the third supporting plate 40, so that the water flowing from the ninth ditch 425 into the seventh ditch 421 and the eighth ditch 423 can be guided toward two sides of the third solar panel tile structure 36 outwardly, so as to prevent the water from overflowing the third draining slot 42 onto the third solar panel 38. Besides, a first wedging portion and a second wedging portion can be formed on two lateral sides of the third supporting plate 40, so that the third solar panel tile structure 36 can be connected to the adjacent solar panel tile structure by the first wedging portion and the second wedging portion. A draining channel 43 is formed on the first wedging portion of the third solar panel tile structure 36, and the draining channel 43 of the third solar panel tile structure 36 can be connected to the draining channel 321 of the second solar panel tile structure 24 for draining the water out of the solar panel tile structure combination 22 rapidly.

The solar panel tile structure combination 22 can further include a fourth solar panel tile structure 44. As shown in FIG.2, the fourth solar panel tile structure 44 includes a fourth panel 46 and a fourth supporting plate 48 for supporting the fourth solar panel 46. At least one fourth draining slot 50 is formed on the fourth supporting plate 48 and disposed around the fourth solar panel 46 for draining water surrounding the fourth solar panel 46. The fourth draining slot 50 includes a tenth ditch 501 disposed on a left side of the fourth supporting plate 48, an eleventh ditch 503 disposed on a right side of the fourth supporting plate 48, and a twelfth ditch 505 disposed on an upper side of the fourth supporting plate 48 and connected to the tenth ditch 501 and the eleventh ditch 503. Ends of the tenth ditch 501 and the eleventh ditch 503 far from the twelfth ditch 505 can bend outward the fourth supporting plate 48, so that the water flowing from the twelfth ditch 505 into the tenth ditch 501 and the eleventh ditch 503 can be guided toward two sides of the fourth solar panel tile structure 44 outwardly, so as to prevent the water from overflowing the fourth draining slot 50 onto the fourth solar panel 46. Besides, a first wedging portion 52 and a second wedging portion 54 can be formed on two lateral sides of the fourth supporting plate 48, and a draining channel 521 is formed on the first wedging portion 52. The fourth solar panel tile structure 44 can be connected to the adjacent solar panel tile structures by the first wedging portion 52 and the second wedging portion 54. The draining channel 521 of the fourth solar panel tile structure 44 can be connected to the draining channel 145 of the first solar panel tile structure 10 for draining the water leaking from the gap between the corresponding wedging portions of the adjacent solar panel tile structures.

For assembling the solar panel tile structure combination 22, the first wedging portion 141 of the first solar panel tile structure 10 can be wedged with the corresponding second wedging portion of the third solar panel tile structure 36 tightly, or the second wedging portion 143 of the first solar panel tile structure 10 can be wedged with the corresponding first wedging portion of the third solar panel tile structure 36 tightly, so as to combine the first solar panel tile structure 10 with the third solar panel tile structure 34 in X direction. In addition, the first wedging portion 52 of the fourth solar panel tile structure 44 can be wedged with the corresponding second wedging portion 34 of the second solar panel tile structure 24 tightly, or the first wedging portion 32 of the second solar panel tile structure 24 can be wedged with the corresponding second wedging portion 54 of the fourth solar panel tile structure 44 tightly, so as to combine the second solar panel tile structure 24 with the fourth solar panel tile structure 44 in X direction. Furthermore, a low side of the first solar panel tile structure 10 can be engage with the upper side of the fourth solar panel tile structure 44 in Y direction substantially perpendicular to X direction, and a low side of the third solar panel tile structure 35 can be engaged with the upper side of the second solar panel tile structure 24 in Y direction, so as to assemble the solar panel tile structure combination 22 as the array.

Meanwhile, each draining slot of the solar panel tile structure combination 22 can drain the water surrounding each solar panel. For preventing the water from overflowing each draining slot onto each solar pane, two ends of each draining slot can bend outward the supporting plate whereon the draining slot is formed for guiding the water out of the solar panels. As shown in FIG.2, the seventh ditch 421 of the third solar panel tile structure 35 can be for guiding the water away to the eleventh ditch 503 of the fourth solar panel tile structure 44, and the second ditch 163 of the first solar panel tile structure 10 can be for guiding the water away to the fourth ditch 301 of the second solar panel tile structure 24. For example, part of the water on the first solar panel tile structure 10 can flow from the third ditch 165 toward the first ditch 161 for draining out of the solar panel tile structure combination 22, and other part of the water on the first solar panel tile structure 10 can flow from the third ditch 165 to the second ditch 163 for being guided toward the fourth ditch 301 of the second solar panel tile structure 24 and for draining out of the solar panel tile structure combination 22 though the draining channel 521 of the fourth solar panel tile structure 44. Similarly, part of the water on the third solar panel tile structure 36 can flow from the ninth ditch 425 to the eighth ditch 423 for draining out of the solar panel tile structure combination 22, and other part of the water on the third solar panel tile structure 36 can flow from the ninth ditch 425 to the seventh ditch 421 for being guided toward the eleventh ditch 503 of the fourth solar panel tile structure 44 and for draining out of the solar panel tile structure combination 22. It should be mentioned that each draining channel between the adjacent solar panel tile structures can be connected to the adjacent one in Y direction, as the dotted line shown in FIG.2, so that the water can flow from the draining channel to the next adjacent draining channel in Y direction for draining out of the solar panel tile structure combination 22. Structures and functions of the second solar panel tile structure 24, the third solar panel tile structure 36, and the fourth solar panel tile structure 44 are the same as ones of the first solar panel tile structure 10, and detailed description is omitted herein for simplicity.

Comparing to the prior art, the solar panel tile structure of the present invention disposes the draining slot around the solar panel, and the draining channel connected to the corresponding draining slot between the adjacent supporting plates, so that the water can be drained out of the solar panel tile structure rapidly though the draining slot and the draining channel for preventing the solar panel from drenching. The solar panel tile structure of the present invention not only has simply structure and convenient assembly, but also has a draining system with preferred efficiency for preventing the water from overflowing the draining slot onto the solar panel, effectively.

## Claims

1. A solar panel tile structure (10) comprising:
a solar panel; and
**characterized in that** the solar panel tile structure (10) further comprises:
a supporting plate (14) for supporting the solar panel (12), at least one draining slot (16) being formed on the supporting plate (14) and disposed around the solar panel (12) for draining water surrounding the solar panel (12).

2. The solar panel tile structure (10) of claim 1, **characterized in that** a first wedging portion (141) and a second wedging portion (143) are formed on two lateral sides of the supporting plate (14) respectively, and the first wedging portion (141) and the second wedging portion (143) are structural portions capable of wedging with each other tightly.

3. The solar panel tile structure (10) of claim 2, **characterized in that** a draining channel (145) is formed on the first wedging portion (141).

4. The solar panel tile structure (10) of claims 1, 2, or 3, **characterized in that** the draining slot (16) comprises:
a first ditch (161) disposed on a left side of the supporting plate (14);
a second ditch (163) disposed on a right side of the supporting plate (14); and
a third ditch (165) disposed on an upper side of the supporting plate (1 4) and connected to the first ditch (161) and the second ditch (163).

5. The solar panel tile structure (10) of claim 4, **characterized in that** the first ditch (161) is parallel to the second ditch (163) substantially, and the third ditch (165) is perpendicular to the first ditch (161) and the second ditch (163) substantially.

6. The solar panel tile structure (10) of claims 4 or 5, **characterized in that** ends of the first ditch (161) and the second ditch (163) far from the third ditch (1 65) bend outward the supporting plate (14).

7. A solar panel tile structure combination (22), **characterized in that** the solar panel tile structure combination (22) comprises:
a first solar panel tile structure (10) comprising:
a first solar panel (12); and
a first supporting plate (14) for supporting the first solar panel (12), at least one first draining slot (16) being formed on the first supporting plate (14) and disposed around the first solar panel (12) for draining water surrounding the first solar panel (12); and
a second solar panel tile structure (24) connected to the first solar panel tile structure (10), the second solar panel tile structure (24) comprising:
a second solar panel (26); and
a second supporting plate (28) for supporting the second solar panel (26), at least one second draining slot (30) being formed on the second supporting plate (28) and disposed around the second solar panel (26) for draining water surrounding the second solar panel (26) and for draining the water from the first draining slot (16).

8. The solar panel tile structure combination (22) of claim 7, **characterized in that** the first draining slot (16) comprises:
a first ditch (161) disposed on a left side of the first supporting plate (14);
a second ditch (163) disposed on a right side of the first supporting plate (14); and
a third ditch (165) disposed on an upper side of the first supporting plate (14) and connected to the first ditch (161) and the second ditch (163).

9. The solar panel tile structure combination (22) of claim 8, **characterized in that** the second draining slot (30) comprises:
a fourth ditch (301) disposed on a left side of the second supporting plate (28);
a fifth ditch (303) disposed on a right side of the second supporting plate (28); and
a sixth ditch (305) disposed on an upper side of the second supporting plate (28) and connected to the fourth ditch (301) and the fifth ditch (303).

10. The solar panel tile structure combination (22) of claim 9, **characterized in that** the second ditch (163) is for guiding the water toward the fourth ditch (301).

11. The solar panel tile structure combination (22) of claims 7, 8, 9, or 10, **characterized in that** the solar panel tile structure combination (22) further comprises:
a third solar panel tile structure (36) for connecting to the first solar panel tile structure (10) and the second solar panel tile structure (24), the third solar panel tile structure (36) comprising:
a third solar panel (38); and
a third supporting plate (40) for supporting the third solar panel (38), at least one third draining slot (42) being formed on the third supporting plate (40) and disposed around the third solar panel (38) for draining water surrounding the third solar panel (38); and
a fourth solar panel tile structure (44) for connecting to the first solar panel tile structure (10) and the second solar panel tile structure (24), the fourth solar panel tile structure (44) comprising:
a fourth solar panel (46); and
a fourth supporting plate (48) for supporting the fourth solar panel (46), at least one fourth draining slot (50) being formed on the fourth supporting plate (48) and disposed around the fourth solar panel (46) for draining water surrounding the fourth solar panel (46) and for draining the water from the third draining slot (42);
wherein the first solar panel tile structure (10), the second solar panel tile structure (24), the third solar panel tile structure (36), and the fourth solar panel tile structure (44) are combined with each other as an array structure.

12. The solar panel tile structure combination (22) of claim 11, **characterized in that** the third draining slot (42) comprises:
a seventh ditch (421) disposed on a left side of the third supporting plate (40);
a eighth ditch (423) disposed on a right side of the third supporting plate (40); and
a ninth ditch (425) disposed on an upper side of the third supporting plate (40) and connected to the seventh ditch (421) and the eighth ditch (423); and
the fourth draining slot (50) comprises:
a tenth ditch (501) disposed on a left side of the fourth supporting plate (48);
an eleventh ditch (503) disposed on a right side of the fourth supporting plate (48); and
a twelfth ditch (505) disposed on an upper side of the fourth supporting plate (48) and connected to the tenth ditch (501) and the eleventh ditch (503).

13. The solar panel tile structure combination (22) of claim 12, **characterized in that** ends of the seventh ditch (421) and the eighth ditch (423) far from the ninth ditch (425) bend outward the third supporting plate (40), and ends of the tenth ditch (501) and the eleventh ditch (503) far from the twelfth ditch (505) bend outward the fourth supporting plate (48).

14. The solar panel tile structure combination (22) of claims 12 or 13, **characterized in that** the seventh ditch (421) is for guiding the water toward the eleventh ditch (503).

15. The solar panel tile structure combination (22) of claims 7, 8, 9, 10, 1 1 , 12, 13, or 14, **characterized in that** the first solar panel tile structure (10) further comprises:
a junction box (18) disposed on a side of the first supporting plate (14); and
a transmission cable, two ends of the transmission cable being electrically connected to the first solar panel (12) and the junction box (18) for transmitting electricity transformed from the first solar panel (12) to the junction box (18).
